(19) Europäisches Patentamt / European Patent Office / Office européen des brevets

(11) **EP 2 461 565 B1**

(12) **EUROPEAN PATENT SPECIFICATION**

(45) Date of publication and mention
of the grant of the patent:
**19.04.2017 Bulletin 2017/16**

(51) Int Cl.:
*H04N 5/14* *(2006.01)*          *H04N 7/01* *(2006.01)*

(21) Application number: **11191542.7**

(22) Date of filing: **01.12.2011**

(54) **Motion estimation method for frame rate up conversion applications**

Bewegungseinschätzungsverfahren für Rahmenraten-Aufwärtsumwandlungsanwendungen

Procédé d'estimation du mouvement pour des applications de conversion de la fréquence d'image

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR** | (74) Representative: **Cayli, Hülya**<br>**Paragon Consultancy Inc.**<br>**Koza Sokak No: 63/2**<br>**GOP**<br>**06540 Ankara (TR)** |
| (30) Priority: **03.12.2010 TR 201010080** | |
| (43) Date of publication of application:<br>**06.06.2012 Bulletin 2012/23** | (56) References cited:<br>WO-A1-2005/109899      US-A1- 2008 204 592<br>US-A1- 2009 110 076      US-A1- 2010 053 451 |
| (73) Proprietor: **Vestel Elektronik Sanayi ve Ticaret A.S.**<br>**45030 Manisa (TR)** | • PATRAS I ET AL: "Dense Motion Estimation Using Regularization Constraints on Local Parametric Models", IEEE TRANSACTIONS ON IMAGE PROCESSING, IEEE SERVICE CENTER, PISCATAWAY, NJ, US, vol. 13, no. 11, 1 November 2004 (2004-11-01), pages 1432-1443, XP011120315, ISSN: 1057-7149, DOI: 10.1109/TIP.2004.836179 |
| (72) Inventor: **Ozkalayci, Burak Oguz**<br>**45030 Manisa (TR)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

### Technical Field

The present invention relates to a forward-backward motion estimation method in frame rate up conversion for video applications.

### Prior Art

A video is made up of plural frames, each frame being a still image, the effect of showing consecutive frames being to give the impression of movement. The frame rate of videos is generally sufficiently high such that a viewer cannot perceive the individual frames but rather perceives a continuous moving image.

On some television displays it is desirable to increase the frame rate from that at which the video being displayed was originally captured. This can be due to increased frame rate requirement for display in accordance with a different standard from that at which the video was captured.

For frame rate up conversion applications, new frames, which are generated by a motion estimation method, are inserted between existing frames of the video content. One of the most disturbing disadvantages of these applications is the halo effect that is caused by erroneous motion estimation. Halo effect arises around the foreground objects due to the occlusion phenomena. Since the motion estimation step is prone to assign erroneous motion vectors to occluded regions the erroneous motion compensated interpolation creates hot air like views around the foreground objects. In order to avoid or decrease such halo effect, the motion vectors of the occlusion regions should be estimated carefully. In image/video processing literature there exist many occlusion handling approaches.

In the article Gerard de Haan, Paul W.A.C. Biezen, Henk Huijgen, Olukayode A. Ojo "True-Motion Estimation with 3-D Recursive Search Block Matching", IEEE Transactions on Circuits and Systems for Video Technology vol. 3, no. 5, pp. 368-379, October 1993, a recursive block matching motion estimation algorithm is disclosed. According to this document, a motion estimation algorithm to estimate the true motion vector field, which is fundamentally different from motion estimation for coding applications, should be spatially and temporally smooth. This phenomenon arises from the assumption of the constant inertia of the moving objects in the video. In order to implicitly enforce this spatial and temporal smoothness in this document, a recursive search algorithm, 3DRS, which limits the search range of the estimator to a few candidate motion vectors which are spatially and temporally in the vicinity of the search location, is proposed. In this document, the motion vector of each frame block is estimated in a preferred scanning order and the convergence of the estimates are obtained recursively updating the motion vector field in temporal domain by the next frame in the video stream.

US 2010/0053451 describes a motion estimation method for frame rate up conversion by selecting between a forward motion vector and a backward motion vector and applying a filter algorithm in order to smooth the selected motion vector. US 2009/0110076 calculates a smoothness constraint by using partial derivatives or a quadratic difference operator.

### Brief Description of the Invention

Present invention, as defined in the claims, provides a method for frame rate up conversion application which comprises the steps of; creating motion vector fields (MVF_fw, MVF_bw) by estimating the motion vectors of each frame block in a preferred scanning order, creating a candidate set of updated motion vector fields by updating a forward motion vector field and a backward motion vector field using a recursive search method, merging updated motion vector fields by selecting motion vector field among said vector fields which has minimum cost value which consist of sum of absolute difference value and local motion vector smoothness metric ..

In this method, vector fields are generated and merged by using a recursive search method. Thus, smoothness cost, which is minimized by using one of the candidate vector and vector fields of the neighbour blocks of the block to be updated, is calculated recursively for each block. Since SAD and smoothness based cost is calculated recursively, a smoother reliable motion vector field is obtained in frame rate up conversion applications.

### Object of the Invention

Object of the present invention is to provide an improved method for a frame rate up conversion application.

Another object of the present invention is to estimate forward motion vector field and backward motion vector field for a current frame and a next frame.

Another object of the present invention is to merge forward motion vector field and backward motion vector field to obtain estimated motion vector field.

Another object of the present invention is using a SAD and smoothness based cost, which is calculated by using recursively merged vector field, for merging vector fields.

Another object of the present invention is generating a smoother and reliable motion vector field in a frame rate up conversion application.

**Brief Description of the Drawings**

**Figure 1;** illustrates a block diagram of a device for frame up conversion application.
**Figure 2;** illustrates the occlusion region in a frame.
**Figure 3;** illustrates a forward motion vector field.
**Figure 4;** illustrates a backward motion vector field.
**Figure 5;** illustrates a merged motion vector field.

The reference numbers as used in figures may possess the following meanings;

| | |
|---|---|
| Forward motion vector field | (MVF_fw) |
| Backward motion vector field | (MVF_bw) |
| Updated forward motion vector field | (MVF_fw_upd) |
| Updated backward motion vector field | (MVF_bw_upd) |
| Merged vector field | (MVF_mg_upd) |
| Current frame | $(f_{n-1})$ |
| Next frame | $(f_n)$ |
| Forward motion estimation unit | (1) |
| Backward motion estimation unit | (2) |
| Merging unit | (3) |
| Dynamic background | (4) |
| Static foreground | (5) |
| Cover region | (6) |
| Uncover region | (7) |
| Spatial block | (8) |
| Current block | (9) |
| Temporal block | (10) |
| Local neighbour blocks | (11) |

**Detailed Description of the Invention**

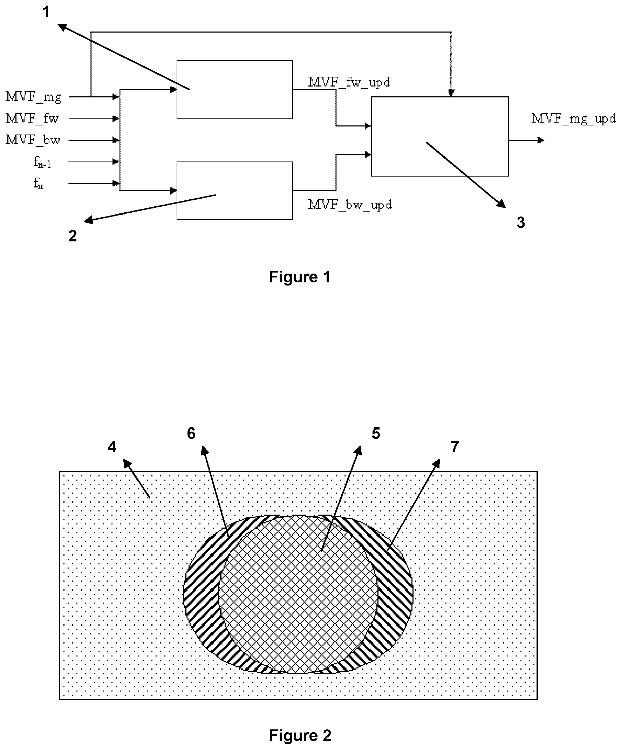

The present invention provides a method for frame rate up conversion applications. As shown in figure 1, said method comprises the steps of; creating motion vector fields (MVF_fw, MVF_bw) by estimating the motion vectors of each frame block in a preferred scanning order, updating the forward motion vector field (MVF_fw) and backward motion vector field (MVF_bw) by using a recursive search algorithm in order to get a candidate set of updated forward motion vector field (MVF_fw_upd) and updated backward motion vector field (MVF_bw_upd) respectively and merging updated motion vector fields (MVF_fw_upd, MVF_bw_upd) by selecting motion vector field among candidate set of said vector fields (MVF_fw_upd, MVF_bw_upd) which has minimum sum of absolute difference value and by adding a smoothness cost, which is calculated according to selected vector field in order to get a merged vector field (MVF_mg_upd).

A forward motion estimation unit (1) and a backward motion estimation unit (2) updates forward motion vector field (MVF_fw) and backward motion vector field (MVF_bw) of a current block that to be updated respectively, by a recursive motion estimation algorithm (such as three-dimensional recursive search (3DRS)) and a merging unit (3) merges updated motion vectors (MVF_fw_upd, MVF_bw_upd). Recursive motion estimation algorithm generates a candidate set of vector fields from the neighbour blocks of the current block, namely spatial (already updated) block and temporal (not updated) block. By using a recursive search method, the forward motion estimation unit (1) assigns the best Sum of Absolute Difference (SAD) performing motion vector among the candidates for matching the current block in a current frame $(f_{n-1})$ to the current block in a next frame $(f_n)$. Similarly, backward motion estimation unit (2) assigns the best SAD performing motion vector among the candidates for matching the current block in the next frame $(f_n)$ to

3

the current block in the current frame ($f_{n-1}$).

Except of the occlusion regions that contains cover regions (6) and uncover regions (7), estimated backward motion vector field (MVF_bw) is expected to be negated version of the forward motion vector field (MVF_fw). Occlusion regions as cover (6) and uncover (7) regions for the static foreground (5) and dynamic background (4) cases are shown in figure 2. In forward motion estimation for dynamic background and static foreground case, covered area should be shown in next frame. Since there is no information about content of said covered area, these blocks would be estimated erroneously. Similar situation happens in backward motion estimation. Thus, the motion vectors of cover regions (6) are expected to be estimated erroneously in the forward motion vector field (MVF_fw) and the motion vectors of uncover regions (7) are expected to be estimated erroneously in the backward motion vector field (MVF_bw). However it is also expected to get correct motion vector estimations for uncover (7) and cover (6) regions in the forward motion vector fields (MVF_fw) and backward motion vector field (MVF_bw) respectively. By merging the forward motion vector fields (MVF_fw) and backward motion vector fields (MVF_bw), a reliable motion vector field that estimates on cover (6) and uncover (7) regions is obtained.

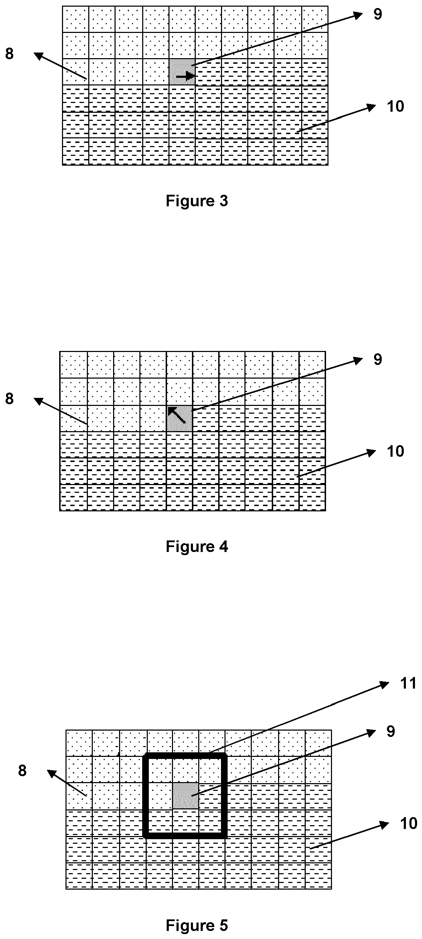

For the merging process of the forward motion vector fields (MVF_fw) and backward motion vector fields (MVF_bw), the block wise recursive structure of the motion vector is also applied. The update of the current block is done right after the updates of the forward motion vector fields (MVF_fw) and backward motion vector fields (MVF_bw). The updated forward motion vector fields (MVF_fw_upd) and updated backward motion vector fields (MVF_bw_upd) of the block to be updated are two candidates for the merging. Among these two vector fields (MVF_fw_upd, MVF_bw_upd); the one which has minimum sum of absolute differences (SAD) and better smoothness parameter, that modifies vector field in order to provide a smoother motion vector field, is assigned as the merged motion vector field (MVF_mg_upd) of the block. Smoothness parameter is a vector field that is calculated by using vector fields of a local neighbour blocks that are neighbour blocks of the current block. An example for merging of the forward motion vector field (MVF_fw) and backward motion vector field (MVF_bw) is shown in figures 3-5. In these figures, current block (9) is updated according to both updated forward motion vector field (MVF_fw_upd) and updated backward motion field (MVF_bw_upd) by their SAD parameter and smoothness parameter. Smoothness parameter uses local neighbour blocks (11). Local neighbour blocks (11) are shown as 3x3 region and said region comprises spatial (8) and temporal (10) blocks.

The proposed merging method, which selects the minimum SAD and maximum smoothness constraint satisfying motion vector among the forward and backward motion vector candidates, can be mathematically expressed with the equation (A);

$$V_{merged} = \arg\min_{V \in \{V_{fwd}, V_{bwd}\}} SAD(V) + \lambda \sum_{V_n \in N} |V - V_n|$$

(A)

In the equation (A), $V_{merged}$ is the merged vector field (MVF_mg_upd), $V_{fwd}$ is the updated forward motion vector field (MVF_fw_upd), $V_{bwd}$ is the updated backward motion vector field (MVF_bw_upd), $V_n$ is the motion vectors of local neighbour blocks and $\lambda$ is a weighting parameter for the smoothness cost. Said weighting parameter can be a fixed value, which is calculated experimentally, or it can be calculated adaptively according to updated motion vector fields (MVF_fw_upd, MVF_bw_upd, MVF_mg_upd). As an example regional SAD or regional smoothness dissipation parameter can be used for calculating said weighting parameter. When the weighting parameter ($\lambda$) becomes higher, the merged motion vector field (MVF_mg_upd) becomes smoother. The recursively updated/estimated merged motion field is used for calculating the smoothness cost. Since said vector field is obtained by recursive motion estimation, smoothness cost is calculated recursively for each of the blocks.

Forward motion vector fields (MVF_fw) and backward motion vector fields (MVF_bw) are estimated block by block. Thus the recursive motion estimation algorithm can add some motion vectors to candidate set from the backward motion vector fields (MVF_bw) for the forward motion estimation or forward vector motion fields (MVF_fw) for the backward motion estimation steps. The motion vector added to candidate set from the backward motion vector field (MVF_bw) is negated for the forward motion estimation. The same procedure can be applied to backward motion estimation similarly. By adding motion vectors from the other directional field increases the rate of convergence of the estimation and compatibility of the estimated forward motion vector fields (MVF_fw) and backward motion vector fields (MVF_bw).

The SAD criterion in the merging step provides the discrimination measure between the reliable and unreliable motion vector fields on cover/uncover regions from the forward motion vector fields (MVF_fw) and backward motion vector fields (MVF_bw). Since the forward motion vector fields (MVF_fw) are expected to be more reliable on uncover regions and backward motion vector fields (MVF_bw) are expected to be more reliable on cover regions, their corresponding SAD match performance are also expected to be correlated with their reliability. Since true motion vector fields of the videos are smooth in general, the smoothness constraint in the merging step provides the necessary condition for the smoothness of the merged motion vector field (MVF_mg_upd).

Within the method provided by the present invention, a smoothness cost is used for merging the forward motion vector field (MVF_fw) and backward motion vector field (MVF_bw) in addition to the sum of absolute difference values of the vector fields (MVF_fw, MVF_bw). Since the smoothness cost used for merging operation uses recursive vector field of merged motion vector field (MVF_mg_upd) for each block, a smoother motion vector field is generated in a frame rate up conversion application.

**Claims**

1. A forward-backward motion estimation method in frame rate up conversion for video applications comprising the steps of; creating motion vector fields (MVF_fw, MVF_bw) by estimating the motion vectors of each frame block in a preferred scanning order, creating a candidate set of two updated motion vector fields (MVF_fw_upd, MVF_bw_upd) obtained by updating a forward motion vector field (MVF_fw), which is obtained by assigning the best Sum of Absolute Difference performing motion vector among the candidates for matching a current block in a current frame ($f_{n-1}$) to a current block in a next frame ($f_n$), and a backward motion vector field (MVF_bw), which is obtained by assigning the best Sum of Absolute Difference performing motion vector among the candidates for matching a current block in a next frame ($f_n$)to a current block in a current frame ($f_{n-1}$), using a block wise recursive search method;

   - merging said updated forward motion vector field (MVF_fw_upd) and said updated backward motion vector field (MVF_bw_upd)by selecting among said updated forward vector field (MVF_fw_upd) and said updated backward motion vector field (MVF_bw_upd) the one which has minimum sum of absolute difference value and by adding a smoothness cost, which is calculated by using vector fields of local neighbor blocks (11) that are neighbor blocks of the current block, **characterized in that** the updated merged vector field is calculated as;

$$V_{merged} = \arg\min_{V \in \{V_{fwd}, V_{bwd}\}} SAD(V) + \lambda \sum_{V_n \in N} |V - V_n|$$

   wherein $V_{merged}$ is the merged vector field (MVF_mg_upd), $V_{fwd}$ is the updated forward motion vector field (MVF_fw_upd), $V_{bwd}$ is the updated backward motion vector field ((MVF_bw_upd), $V_n$ is vector field of the local neighbor blocks and $\lambda$ is a weighting parameter for the smoothness cost.

2. A method according to claim 1, wherein said recursive search method is a three dimensional recursive search method.

3. A method according to claim 1, wherein the local neighbor blocks (11) contains at least one spatial block (8).

4. A method according to claim 1, wherein the local neighbor blocks (11) contains at least one temporal block (10).

5. A method according to claim 1, wherein $\lambda$ is a weighting parameter that is used for calculating merged vector fields.

6. A method according to claim 5, wherein said weighting parameter is calculated experimentally.

7. A method according to claim 5, wherein said weighting parameter is calculated adaptively according to updated motion vector fields (MVF_fw_upd, MVF_bw_upd, MVF_mg_upd).

8. A method according to claim 7, wherein said weighting parameter is calculated by using a regional sum of absolute difference dissipation parameter.

9. A method according to claim 7, wherein said weighting parameter is calculated by using a regional smoothness dissipation parameter.

**10.** A system for frame rate up conversation; performing a method according to any of the preceding claims.


**Patentansprüche**

**1. Forward-Backward-Bewegungsschätzverfahren** (Vor-Rück-Bewegungsschätzung) in Bildfrequenz-Up-Wandlung für Video-Anwendungen umfassend die Schritte; Erzeugen von Bewegungsvektorfeldern (MVF_fw, MVF_bw) durch Schätzen der Bewegungsvektoren von jedem Bildblock in einer bevorzugten Scan-Reihenfolge, Erzeugen einer Kandidatenliste von zwei aktualisierten Bewegungsvektorfeldern (MVF_fw_upd, MVF_bw_upd), erhalten durch Aktualisieren eines Forward-Bewegungsvektorfelds (MVF_fw), das erhalten wird durch Zuordnen des Bewegungsvektors mit dem besten Ergebnis der Summe der absoluten Differenzen innerhalb der Kandidaten für die Übereinstimmung eines aktuellen Blocks in einem aktuellen Bild ($f_{n-1}$) mit einem aktuellen Block in einem nächsten Bild ($f_n$), und eines Backward-Bewegungsvektorfelds (MVF_bw), das erhalten wird durch Zuordnen des Bewegungsvektors mit dem besten Ergebnis der Summe der absoluten Differenzen innerhalb der Kandidaten für die Übereinstimmung eines aktuellen Blocks in einem nächsten Bild ($f_n$) mit einem aktuellen Block in einem aktuellen Bild ($f_{n-1}$), unter Verwendung eines blockweisen rekursiven Suchverfahrens, **dadurch gekennzeichnet, dass** es weiterhin die Schritte umfasst;

- Vereinen oder Zusammenführen (merging) des aktualisierten Forward-Bewegungsvektorfelds (MVF_fw_upd) und des aktualisierten Backward-Bewegungsvektorfelds (MVF_bw_upd) durch Wahl innerhalb des aktualisierten Forward-Bewegungsvektorfelds (MVF_fw_upd) und des aktualisierten Backward-Bewegungsvektorfelds (MVF_bw_upd) desjenigen mit einem minimalen Wert der Summe der absoluten Differenzen und durch Hinzufügen einer Weichheits-Kalkulation (smoothness cost) zu dem ausgewählten Vektorfeld, die berechnet wird unter Verwendung von Vektorfeldern von lokalen Nachbarblöcken (11), die Nachbarblöcke des aktuellen Blocks sind, **dadurch gekennzeichnet, dass** das aktualisierte vereinigte Vektorfeld (updated merged vector field) berechnet wird als

$$V_{merged} = \underset{V \in \{V_{fwd}, V_{bwd}\}}{\arg\min} SAD(V) + \lambda \sum_{V_n \in N} |V - V_n|$$

worin $V_{merged}$ das vereinigte (merged) Vektorfeld (MVF_mg_upd) ist,
$V_{fwd}$ das aktualisierte Forward-Bewegungsvektorfeld (MVF_fw_upd) ist,
$V_{bwd}$ das aktualisierte Backward-Bewegungsvektorfeld (MVF_bw_upd) ist,
$V_n$ das Vektorfeld der lokalen Nachbarblöcke ist und $\lambda$ ein Gewichtungsparameter für die smoothness cost ist.

**2.** Verfahren nach Anspruch 1, wobei das rekursive Suchverfahren ein dreidimensionales rekursives Suchverfahren ist.

**3.** Verfahren nach Anspruch 1, wobei die lokalen Nachbarblöcke (11) zumindest einen räumlichen Block (8) umfassen (spatial block).

**4.** Verfahren nach Anspruch 1, wobei die lokalen Nachbarblöcke (11) zumindest einen zeitlichen Block (10) umfassen (temporal block).

**5.** Verfahren nach Anspruch 1, wobei $\lambda$ ein Gewichtungsparameter ist, der verwendet wird zum Berechnen von vereinigten Vektorfeldern (merged vector fields).

**6.** Verfahren nach Anspruch 5, wobei der Gewichtungsparameter experimentell berechnet wird.

**7.** Verfahren nach Anspruch 5, wobei der Gewichtungsparameter adaptiv berechnet wird, entsprechend aktualisierten Bewegungsvektorfeldern (MVF_fw_upd, MVF_bw_upd, MVF_mg_upd).

**8.** Verfahren nach Anspruch 7, wobei der Gewichtungsparameter berechnet wird unter Verwendung einer regionalen Summe eines absoluten Differenz-Dissipations-Parameters.

**9.** Verfahren nach Anspruch 7, wobei der Gewichtungsparameter berechnet wird unter Verwendung eines regionalen Weichheits-Dissipations-Parameters.

10. **System** zur Aufwärts-Bildraten-Wandlung (frame-rate up-conversion), das ein Verfahren nach einem der vorstehenden Ansprüche ausführt.

**Revendications**

1. Procédé d'estimation du mouvement avant-arrière lors d'une conversion à la hausse de la fréquence de trame pour des applications vidéo comprenant les étapes consistant à créer des champs de vecteur de mouvement (MVF_fw, MVF_bw) en estimant les vecteurs de mouvement de chaque bloc de trame dans un ordre de balayage préféré, à créer un ensemble candidat de deux champs de vecteur de mouvement mis à jour (MVF_fw_upd, MVF_bw_upd) obtenus en mettant à jour un champ de vecteur de mouvement avant (MVF_fw), qui est obtenu en attribuant le vecteur de mouvement réalisant la meilleure Somme de Différence Absolue parmi les candidats pour associer un bloc actuel dans une trame actuelle ($f_{n-1}$) à un bloc actuel dans une trame suivante ($f_n$), et un champ de vecteur de mouvement arrière (MVF_bw), qui est obtenu en attribuant le vecteur de mouvement réalisant la meilleure Somme de Différence Absolue parmi les candidats pour associer un bloc actuel dans une trame suivante ($f_n$) à un bloc actuel dans une trame actuelle ($f_{n-1}$), en utilisant un procédé de recherche récursive dans le sens du bloc ;

   - fusionner ledit champ de vecteur de mouvement avant mis à jour (MVF_fw_upd) et ledit champ de vecteur de mouvement arrière mis à jour (MVF_bw_upd) en sélectionnant, parmi ledit champ de vecteur de mouvement avant mis à jour (MVF_fw_upd) et ledit champ de vecteur de mouvement arrière mis à jour (MVF_bw_upd) celui qui a la valeur minimale de somme de différence absolue et en ajoutant un coût de lissage, qui est calculé en utilisant des champs de vecteur de blocs voisins locaux (11) qui sont des blocs voisins du bloc actuel, **caractérisé en ce que** le champ de vecteur fusionné mis à jour est calculé par :

$$V_{merged} = \arg\min_{V \in \{V_{fwd}, V_{bwd}\}} SAD(V) + \lambda \sum_{V_n \in N} |V - V_n|$$

   où $V_{merged}$ est le champ de vecteur fusionné (MVF_mg_upd), $V_{fwd}$ est le champ de vecteur de mouvement avant mis à jour (MVF_fw_upd), $V_{bwd}$ est le champ de vecteur de mouvement arrière mis à jour (MVF_bw_upd), $V_n$ est le champ de vecteur des blocs voisins locaux et $\lambda$ est un paramètre de pondération pour le coût de lissage.

2. Procédé selon la revendication 1, dans lequel ledit procédé de recherche récursive est un procédé de recherche récursive en trois dimensions.

3. Procédé selon la revendication 1, dans lequel les blocs voisins locaux (11) contiennent au moins un bloc spatial (8).

4. Procédé selon la revendication 1, dans lequel les blocs voisins locaux (11) contiennent au moins un bloc temporel (10).

5. Procédé selon la revendication 1, dans lequel $\lambda$ est un paramètre de pondération qui est utilisé pour calculer des champs de vecteur fusionnés.

6. Procédé selon la revendication 5, dans lequel ledit paramètre de pondération est calculé de façon expérimentale.

7. Procédé selon la revendication 5, dans lequel ledit paramètre de pondération est calculé de façon adaptative selon des champs de vecteur de mouvement mis à jour (MVF_fw_upd, MVF_bw_upd, MVF_mg_upd).

8. Procédé selon la revendication 7, dans lequel ledit paramètre de pondération est calculé en utilisant un paramètre de dissipation régionale de somme de différence absolue.

9. Procédé selon la revendication 7, dans lequel ledit paramètre de pondération est calculé en utilisant un paramètre de dissipation régionale de lissage.

10. Système pour conversion à la hausse de fréquence de trame, réalisant un procédé selon l'une quelconque des

revendications précédentes.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100053451 A
- US 20090110076 A

**Non-patent literature cited in the description**

- **GERARD DE HAAN ; PAUL W.A.C. BIEZEN ; HENK HUIJGEN ; OLUKAYODE A. OJO.** True-Motion Estimation with 3-D Recursive Search Block Matching. *IEEE Transactions on Circuits and Systems for Video Technology,* October 1993, vol. 3 (5), 368-379